# EUROPÄISCHE PATENTSCHRIFT

(11) **EP 2 297 505 B1**
(45) Veröffentlichungstag und Bekanntmachung des Hinweises auf die Patenterteilung: **02.01.2013**
(21) Anmeldenummer: 09761356.6
(22) Anmeldetag: 06.05.2009
(51) Int. Cl.: F16L 53/00

(54) **HEIZEINRICHTUNG FÜR EINE FLUIDLEITUNGSKUPPLUNG SOWIE FLUIDLEITUNGSKUPPLUNGSANORDNUNG MIT EINER HEIZEINRICHTUNG**
HEATING DEVICE FOR A FLUID LINE COUPLING AND FLUID LINE COUPLING ARRANGEMENT COMPRISING A HEATING DEVICE
DISPOSITIF DE CHAUFFAGE POUR UN RACCORD DE CONDUITE DE FLUIDE ET ENSEMBLE RACCORD DE CONDUITE DE FLUIDE COMPRENANT UN DISPOSITIF DE CHAUFFAGE

(30) Priorität: 29.05.2008 DE 102008025769
(43) Veröffentlichungstag der Anmeldung: 23.03.2011
(73) Patentinhaber: A. RAYMOND ET CIE, 38000 Grenoble (FR)
(72) Erfinder: GARNIER, Pierrick, F-13001 Marseille (FR)
(74) Vertreter: Rüttgers, Joachim
(86) Internationale Anmeldenummer: PCT/EP2009/003223
(87) Internationale Veröffentlichungsnummer: WO 2009/149793

(56) Entgegenhaltungen:
- EP-A- 1 557 601
- WO-A-2007/073286
- FR-A- 2 586 790
- US-A- 4 553 023
- US-A- 5 975 119

## Beschreibung

Die Erfindung betrifft eine Heizeinrichtung für eine Fluidleitungskupplung gemäß dem Oberbegriff des Patentanspruchs 1.

Die Erfindung betrifft weiterhin eine Fluidleitungskupplungsanordnung mit einer Heizeinrichtung und mit einer Fluidleitungskupplung.

US 4 553 023 offenbart eine Heizeinrichtung für eine Fluidleitungskupplung mit einem Trägerteil, das mit der Fluidleitungskupplung verbindbar ist und das ein mit elektrischer Energie erwärmbares Heizelement aufnimmt.

Eine gattungsgemäße Heizeinrichtung für eine Fluidleitungskupplung ist aus WO 2007/073286 A1 bekannt. Die vorbekannte Heizeinrichtung für eine Fluidleitungskupplung verfügt über ein Trägerteil, das mit der Fluidleitungskupplung verbindbar ist und das ein mit elektrischer Energie erwärmbares Heizelement aufweist. Das Trägerteil ist im Querschnitt U-förmig ausgebildet und auf eine abgeknickte Fluidleitungskupplung im Abknickbereich aufsteckbar. Das Heizelement ist in die Wand des Trägerteiles eingebettet. Die Innenwand des Trägerteiles ist in einem Abstand von der Außenwand der Fluidleitungskupplung angeordnet.

Aus EP 1 557 601 A1 ist ein Heizclip für eine Fluidleitung bekannt, der über zwei Manschettenteile verfügt, die um eine Fluidleitung gelegt und über eine Rastverbindung miteinander verbunden werden. In einem Manschettenteil ist ein Heizelementaufnahmeraum ausgebildet, in den ein Heizelement einfügbar ist. Weiterhin verfügt dieser Heizclip über eine an einem Manschettenteil angebrachte Wärmesenke in Gestalt eines halbzylinderartig ausgebildeten Teiles, das thermodynamisch mit dem Heizelement in Verbindung steht und die an der Fluidleitung anliegt. Das andere Manschettenteil liegt in einem Mittenbereich an der dem Heizelement gegenüberliegenden Seite an der Fluidleitung an, wobei zwischen den freien Enden der Wärmesenke und dem anderen Manschettenteil ein verhältnismäßig großer Luftraum verbleibt.

Der Erfindung liegt die Aufgabe zugrunde, eine Heizeinrichtung für eine Fluidleitungskupplung der eingangs genannten Art sowie eine Fluidleitungskupplungsanordnung mit einer Heizeinrichtung und mit einer Fluidleitungskupplung anzugeben, die sich bei einer verhältnismäßig einfachen Montage durch einen verhältnismäßig hohen thermodynamischen Wirkungsgrad auszeichnet.

Diese Aufgabe wird bei einer Heizeinrichtung der eingangs genannten Art erfindungsgemäß mit den kennzeichnenden Merkmalen des Patentanspruchs 1 gelöst.

Diese Aufgabe wird bei einer Fluidleitungskupplungsanordnung mit einer erfindungsgemäßen Heizeinrichtung und mit einer Fluidleitungskupplung erfindungsgemäß mit den Merkmalen des Patentanspruchs 10 gelöst.

Dadurch, dass bei der erfindungsgemäßen Heizeinrichtung das Heizelement aus dem Heizelementaufnahmeraum radial nach innen über die Innenwand des Manschettenteiles, an dem der Heizelementaufnahmeraum ausgebildet ist, übersteht und der übrige Querschnitt der aus den Manschettenteilen gebildeten, einfach und passgenau montierbaren Ringmanschette größer als der Abstand zwischen der radial nach innen weisenden Stirnseite des Heizelementes und der gegenüberliegenden Innenwand der Ringmanschette ist, ist entlang der Innenwand der Ringmanschette ein durch die Außenwand der Fluidleitungskupplung begrenzter Isolierringraum ausgebildet, der diesen Bereich der Fluidleitungskupplung aufgrund der verhältnismäßig schlechten Wärmeleitfähigkeit und mangels Konvektionsmöglichkeit der Luft isoliert. Dadurch ist bei einem guten thermischen Kontakt des Heizelementes mit der Fluidleitungskupplung zusätzlich eine gute Isolierung erzielt, was insgesamt zu einem hohen thermischen Wirkungsgrad führt.

Weitere zweckmäßige Ausgestaltungen der Erfindung sind Gegenstand der Unteransprüche.

Weitere zweckmäßige Ausgestaltungen und Vorteile der Erfindung sind Gegenstand der nachfolgenden Beschreibung von bevorzugten Ausführungsbeispielen der Erfindung. Es zeigen:
- Fig. 1: in einer teilgeschnittenen Seitenansicht ein erstes Ausführungsbeispiel einer erfindungsgemäßen Heizeinrichtung, die zum Ausbilden einer erfindungsgemäßen Fluidleitungskupplungsanordnung an einer Fluidleitungskupplung angebracht ist,
- Fig. 2: in einer perspektivischen Ansicht die Anordnung gemäß Fig. 2 im Querschnitt durch die Heizeinrichtung und die Fluidleitungskupplung,
- Fig. 3: in einer Seitenansicht die Anordnung gemäß Fig. 1 mit einer aufgeklappten Ringmanschette der Heizeinrichtung,
- Fig. 4: in einer perspektivischen Ansicht die Ringmanschette der Heizeinrichtung gemäß Fig. 1 in einer aufgeklappten Anordnung,
- Fig. 5: in einem Querschnitt durch die Heizeinrichtung und die Fluidleitungskupplung die Anordnung gemäß Fig. 1,
- Fig. 6: in einem der Darstellung gemäß Fig. 5 entsprechenden Querschnitt ein weiteres Ausführungsbeispiel einer erfindungsgemäßen Heizeinrichtung in einer mit einer Fluidleitungskupplung verbundenen Anordnung zum Ausbilden einer erfindungsgemäßen Fluidleitungskupplungsanordnung und
- Fig. 7: in einem Querschnitt entsprechend Fig. 5 und Fig. 6 ein weiteres Ausführungsbeispiel einer erfindungsgemäßen Heizeinrichtung in einer mit einer Fluidleitungskupplung verbundenen Anordnung zum Ausbilden einer erfindungsgemäßen Fluidleitungskupplungsanordnung.

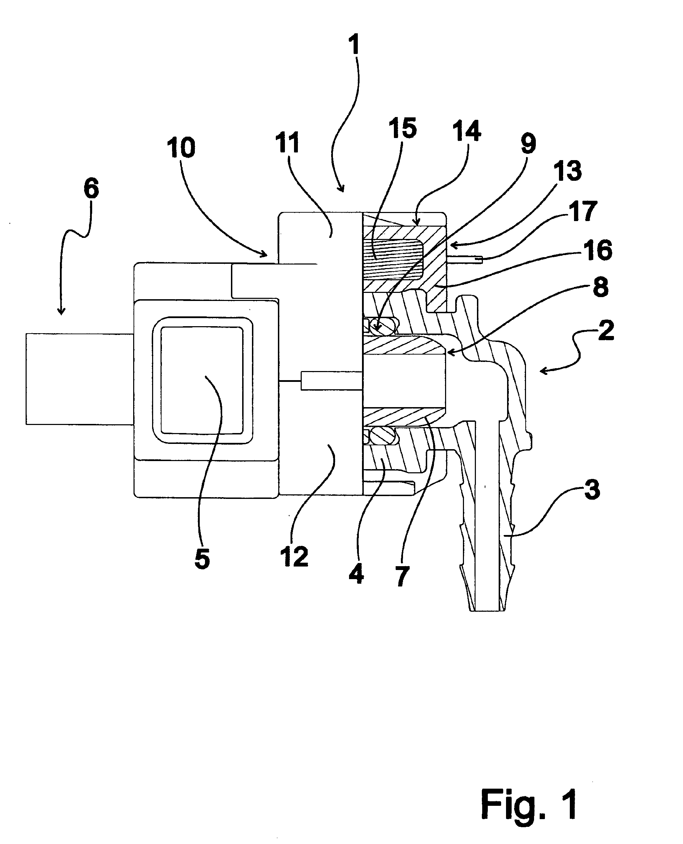

Fig. 1 zeigt in einer teilgeschnittenen Seitenansicht ein Ausführungsbeispiel einer erfindungsgemäßen Heizeinrichtung 1 für eine Fluidleitungskupplung 2 in einer Anordnung mit der Fluidleitungskupplung 2 zum Ausbilden einer erfindungsgemäßen Fluidleitungskupplungsanordnung. Die Fluidleitungskupplung 2 verfügt über einen Anschlussstutzen 3, der in etwa rechtwinklig zu einem im Wesentlichen zylinderförmig ausgebildeten Mittenabschnitt 4 der Fluidleitungskupplung 2 ausgerichtet ist. An einem dem Anschlussstutzen 3 gegenüberliegenden Ende verfügt die Fluidleitungskupplung 2 über eine Sicherungsfeder 5, mit der ein in der Darstellung gemäß Fig. 1 in die Fluidleitungskupplung 2 eingeführtes Einsteckteil 6 lösbar mit der Fluidleitungskupplung 2 verbindbar ist. Das Einsteckteil 6 ist in der Anordnung gemäß Fig. 1 mit einem Einsteckschaft 7 in einem in dem Mittenabschnitt 4 der Fluidleitungskupplung 2 ausgebildeten Aufnahmeraum 8 angeordnet und mit einer Dichteinheit 9 gegen die Fluidleitungskupplung 2 abgedichtet.

Die Heizeinrichtung 1 verfügt bei dem dargestellten Ausführungsbeispiel über eine Ringmanschette 10 als Trägerteil, die über ein Kopfmanschettenteil 11 und über ein Schließmanschettenteil 12 verfügt, die in zusammengefügter Anordnung den Mittenabschnitt 4 ringförmig umgeben. Weiterhin verfügt die Heizeinrichtung 1 über ein Heizelement 13, das in einem in dem Kopfmanschettenteil 11 ausgebildeten Heizelementaufnahmeraum 14 angeordnet ist und diesen vollständig ausfüllt. Das Heizelement 13 weist einen im stromführenden Zustand Wärme abgebenden Stromleiter 15 auf, der in einer Ausgestaltung als PTC-Widerstand und in einer anderen Ausführung als NTC-Widerstand ausgestaltet ist. Der Stromleiter 15 ist in einem den Heizelementaufnahmeraum 14 ausfüllenden Füllmaterial 16 eingebettet, das eine höhere Wärmeleitfähigkeit als Luft und als das Material aufweist, aus dem dem Kopfmanschettenteil 11 hergestellt ist. Der Stromleiter 15 ist über Anschlusselektroden 17 mit elektrischer Energie beaufschlagbar, um Wärme abzugeben.

Das Heizelement 13 der Heizeinrichtung 1 wird wie folgt in den Heizelementaufnahmeraum 14 eingebracht. Bei der Herstellung wird die Ringmanschette 10 um einen der Gestalt des Mittenabschnittes 4 entsprechenden hitzebeständigen Blindkörper gelegt und geschlossen. Dann wird der Stromleiter 15 in etwa mittig in dem Heizelementaufnahmeraum 14 angeordnet. Anschließend wird der Heizelementaufnahmeraum 14 mit dem Füllmaterial 16 verfüllt.

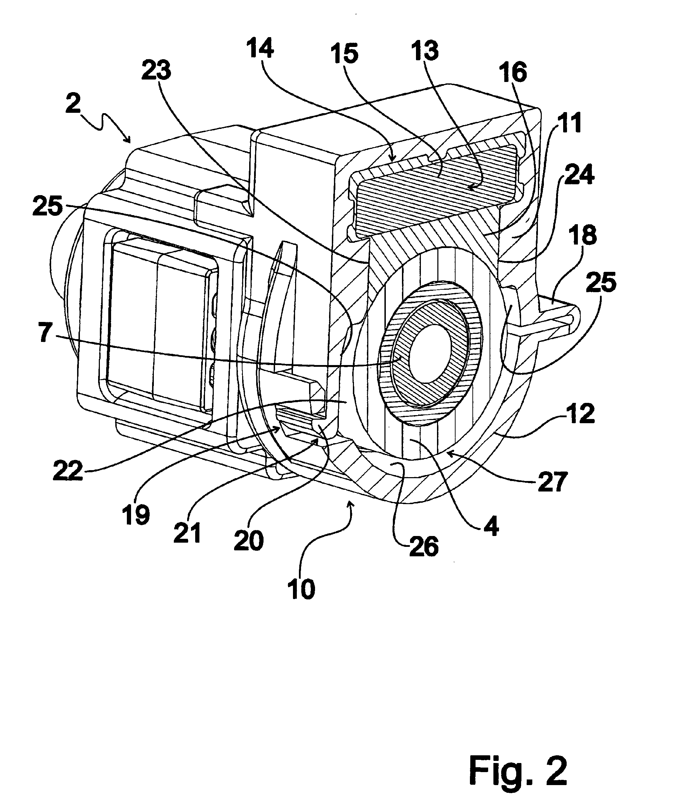

Fig. 2 zeigt in einer perspektivischen Schnittansicht die Anordnung gemäß Fig. 1. Aus Fig. 2 ist ersichtlich, dass das Kopfmanschettenteil 11 und das Schließmanschettenteil 12 im Wesentlichen halbhohlzylinderartig ausgebildet und über ein Filmscharnier 18 an einem Ende fest miteinander verbunden sind. An dem dem Filmscharnier 18 gegenüberliegenden Ende sind das Kopfmanschettenteil 11 und das Schließmanschettenteil 12 über eine Rastverbindung 19 lösbar miteinander verbunden, die durch einen an dem Kopfmanschettenteil 11 ausgebildeten Rasthaken 20 gebildet ist, der in eine in dem Schließmanschettenteil 12 ausgebildete Rasthakenaufnahmeausnehmung 21 eingreift. Der Rasthaken 20 füllt im Wesentlichen die Rasthakenaufnahmeausnehmung 21 aus.

Weiterhin lässt sich Fig. 2 entnehmen, dass das Füllmaterial 16, da der Heizelementaufnahmeraum 14 auf seiner radial nach innen weisenden Seite geöffnet ist, des Heizelementes 13 über einen verhältnismäßig großflächigen Umfangsabschnitt an der radial nach innen weisenden Stirnseite direkt mit der Außenwand 22 des Mittenabschnittes 4 der Fluidleitungskupplung 2 in Kontakt ist, wobei Seitenwände 23, 24 als Abschlusswände des Heizelementaufnahmeraumes 14 mit Vorsprüngen ebenfalls bis an den Mittenabschnitt 4 heranragen und über die Innenwand 25 des Kopfmanschettenteils 11 überstehen. Dadurch weist die Innenwand 25 des Kopfmanschettenteils 11 in radialer Richtung einen Abstand zu der Außenwand 22 des Mittenabschnittes 4 auf. Weiterhin lässt sich der Darstellung gemäß Fig. 2 entnehmen, dass die Innenwand 26 des Schließmanschettenteils 12 ebenfalls in einem radialen Abstand von der Außenwand 22 des Mittenabschnittes 4 beabstandet ist, so dass zwischen den Innenwänden 25, 26 der Ringmanschette 10 und der Außenwand 22 des Mittenabschnittes 4 umfänglich im Bereich zwischen den Seitenwänden 23, 34 ein mit Luft gefüllter Isolierringraum 27 ausgebildet ist. Aufgrund der über den gesamten Umfang gegenüber dem Querschnitt des Mittenabschnittes schmalen Isolierringraumes 27 ist durch die darin ausgebildete, verhältnismäßig schlecht wärmeleitende und konvektionsfreie Luftschicht eine gute Isolierung erzielt.

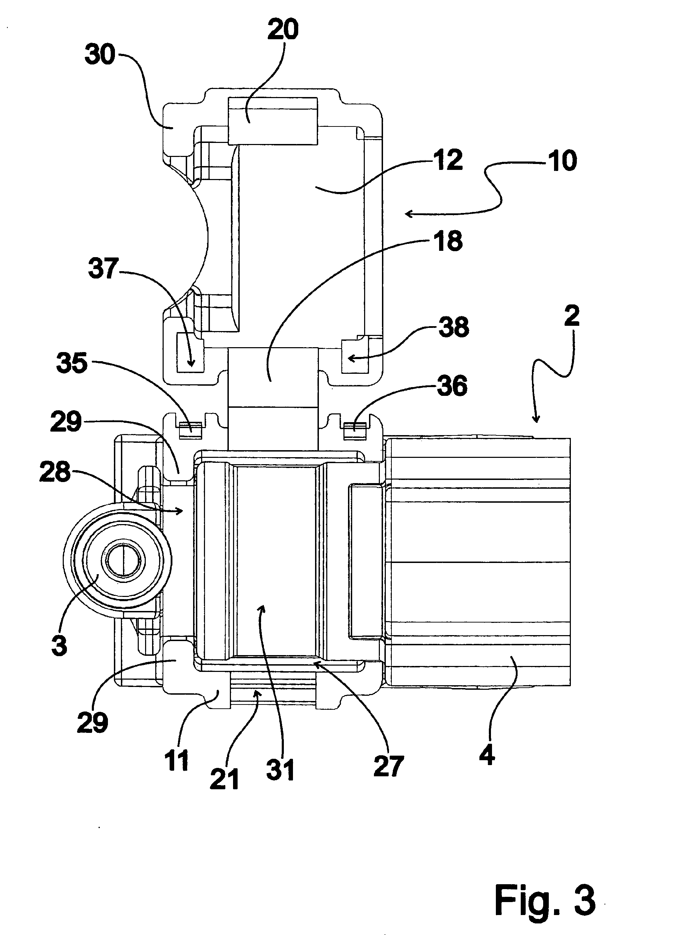

Fig. 3 zeigt in einer Ansicht die Anordnung gemäß Fig. 1 und Fig. 2 mit der Ringmanschette 10 in einer geöffneten Stellung mit Blick auf den Mittenabschnitt 4. Aus Fig. 3 ist ersichtlich, dass der Mittenabschnitt 4 mit einer Randringnut 28 ausgebildet ist, die an der dem Anschlussstutzen 3 zugewandten Seite angeordnet ist. In die Randringnut 28 greifen in geschlossener Stellung der Ringmanschette 10 Ringschultern 29, 30 ein, die somit den Isolierringraum 27 nach außen zum Verhindern von Konvektion abschließen. Weiterhin dient der Eingriff der Ringschulter 29, 30 in die Randringnut 28 zum Fixieren der Ringmanschette 10 gegen ein Verschieben in axialer Richtung.

Der Darstellung gemäß Fig. 3 lässt sich weiterhin entnehmen, dass der Mittenabschnitt 4 im Mittenbereich mit einer Mittenringnut 31 ausgebildet ist, in die die in Fig. 3 nicht sichtbaren Seitenwände 23, 24 zum Minimieren von Wärmeverlusten eingreifen.

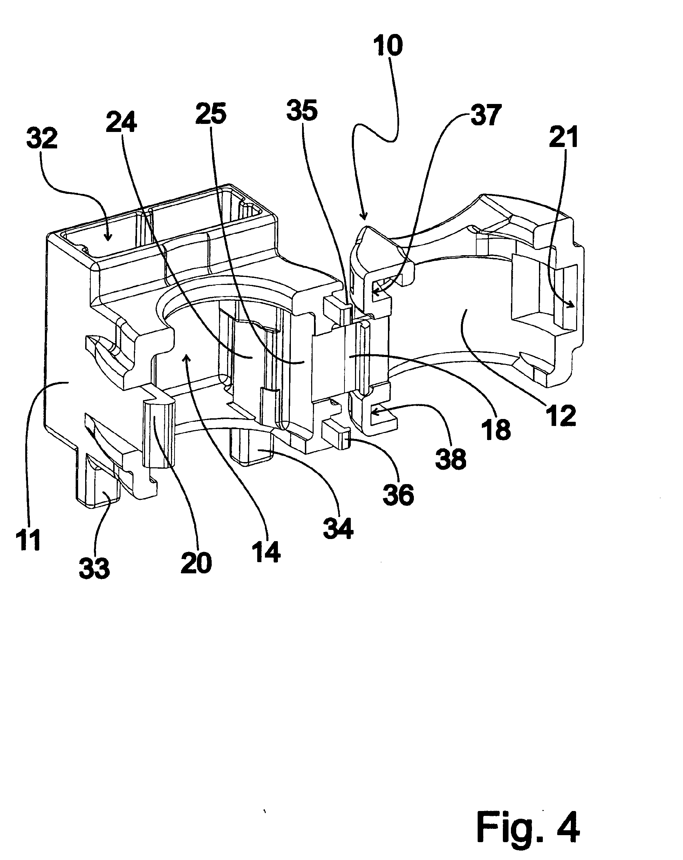

Fig. 4 zeigt in einer perspektivischen Ansicht die Ringmanschette 10 der Heizeinrichtung 1 des Ausführungsbeispiels gemäß Fig. 1. Aus Fig. 4 ist ersichtlich, dass der Heizelementaufnahmeraum 14 an einer Einführseite 32 offen ist. An der der Einführseite 32 gegenüberliegenden Seite des Kopfmanschettenteils 11 sind in axialer Richtung überstehende Fixierzapfen 33, 34 ausgebildet, die in an der Fluidleitungskupplung 2 montierter Anordnung der Ringmanschette 10 an dem Mittenabschnitt 4 anliegen und damit der mechanischen Stabilisierung dienen.

Zusätzlich zu dem Rasthaken 20 sind beidseitig des Filmscharniers 18 Sicherungshaken 35, 36 ausgebildet, die zum Sichern der Ringmanschette 10 bei einem Bruch des Filmscharniers 18 in in dem Schließmanschettenteil 12 ausgebildeten Sicherungshakenaufnahmeausnehmungen 37, 38 eingreifen.

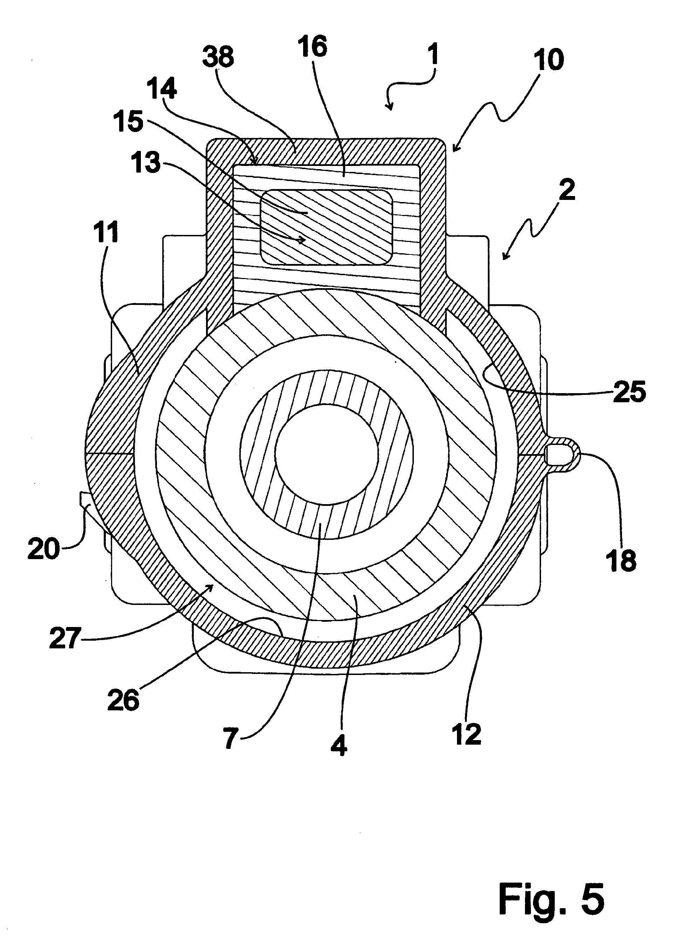

Fig. 5 zeigt in einem Querschnitt die Anordnung gemäß Fig. 1. Aus Fig. 5 ist ersichtlich, dass das Heizelement 13 mit seiner radial nach innen weisenden Stirnseite formschlüssig an der Außenwand des Mittenabschnittes 4 anliegt, so dass von dem Stromleiter 15 bei Beaufschlagen mit elektrischer Energie abgegebene Wärme effizient auf den Mittenabschnitt 4 abgegeben wird. Durch den mit einer im Wesentlichen gleicher radialen Dicke ausgebildeten Isolierringraum 27 um den Mittenabschnitt 4 wird der Wärmeverlust durch diese Widerwirkung der in dem Isolierringraum 27 eingeschlossenen Luft verhältnismäßig klein gehalten.

Aus Fig. 5 ist weiterhin ersichtlich, dass bei dem Ausführungsbeispiel gemäß Fig. 1 bis Fig. 5 der Heizelementaufnahmeraum 14 mit einer flachen Deckwand 39 als weiteren Abschlusswand radial nach außen begrenzt ist, um eine kompakte und bezüglich des Füllmaterials 16 materialsparende Ausgestaltung zu erzielen.

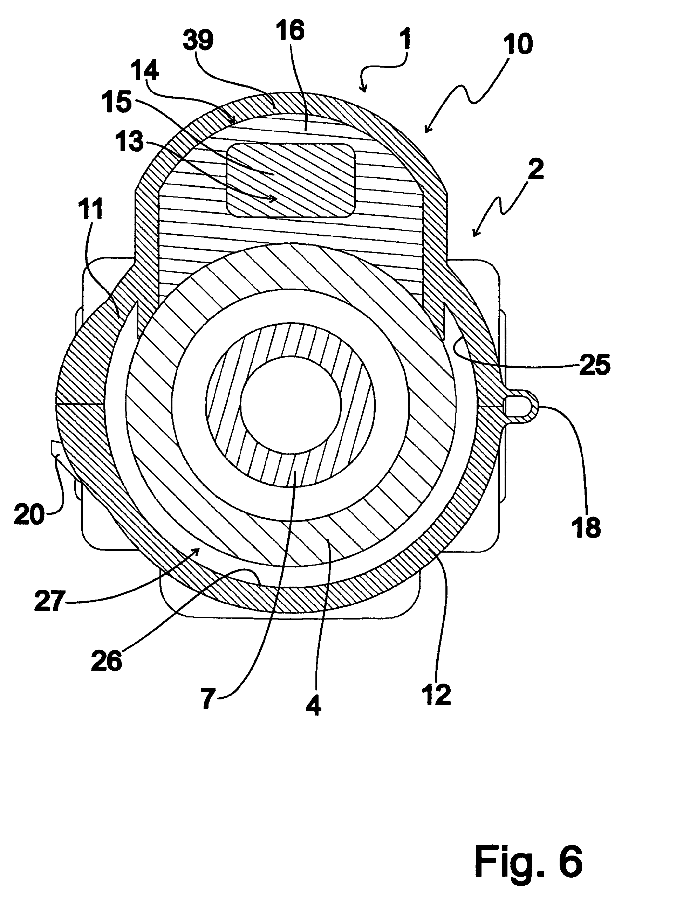

Fig. 6 zeigt in einem Querschnitt ein weiteres Ausführungsbeispiel einer erfindungsgemäßen Heizeinrichtung 1 in einer Anordnung an einer Fluidleitungskupplung 2 zum Ausbilden einer erfindungsgemäßen Fluidleitungskupplungsanordnung, wobei bei dem Ausführungsbeispiel gemäß Fig. 1 bis 5 und bei dem Ausführungsbeispiel gemäß

Fig. 6 einander entsprechende Elemente mit den gleichen Bezugszeichen versehen und im weiteren nicht näher erläutert sind. Bei dem Ausführungsbeispiel gemäß Fig. 6 ist durch eine gewölbte Ausbildung einer sich zwischen den Seitenwänden 23, 24 erstreckenden gewölbten Deckwand 40 als weiteren Abschlusswand und gegenüber dem Ausführungsbeispiel gemäß Fig. 5 weiter voneinander beabstandeten Seitenwänden 23, 24 der Kontaktbereich des Füllmaterials 16 mit der Außenwand 22 des Mittenabschnittes 4 gegenüber den Verhältnissen bei dem Ausführungsbeispiel gemäß Fig. 1 bis Fig. 5 bei einer noch weiterhin akzeptablen Bauhöhe vergrößert, um gegenüber dem Ausführungsbeispiel gemäß Fig. 1 bis Fig. 5 den Wärmeübertrag zu verbessern.

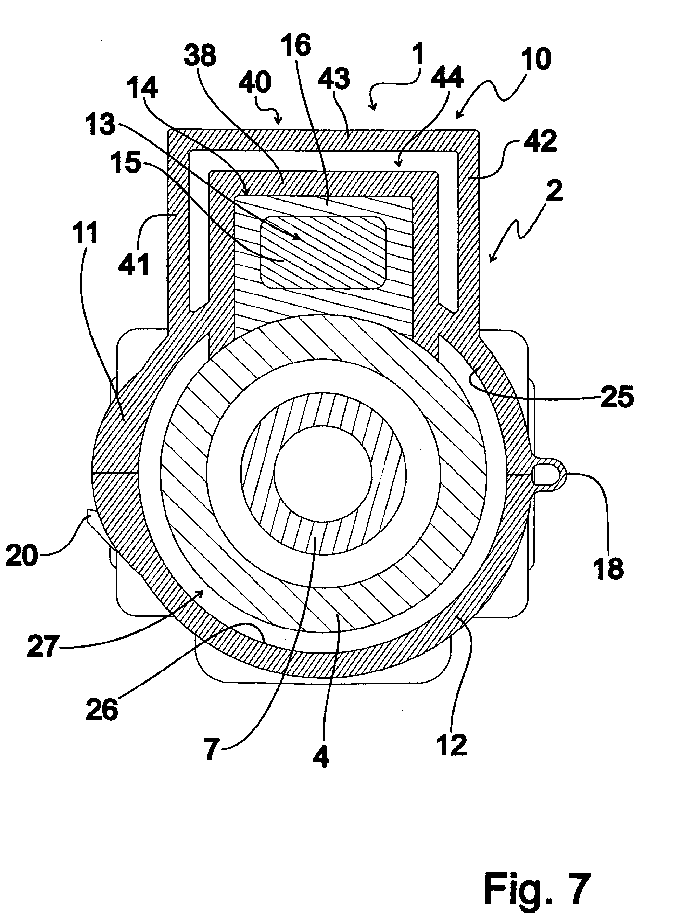

Fig. 7 zeigt in einem Querschnitt ein weiteres Ausführungsbeispiel einer erfindungsgemäßen Heizeinrichtung 1 in einer Anordnung mit einer Fluidleitungskupplung 2 zum Ausbilden einer erfindungsgemäßen Fluidleitungskupplungsanordnung, wobei sich bei dem Ausführungsbeispiel gemäß Fig. 1 bis Fig. 5 und bei dem Ausführungsbeispiel gemäß Fig. 7 einander entsprechende Elemente mit den gleichen Bezugszeichen versehen und im weiteren nicht näher erläutert sind. Bei dem Ausführungsbeispiel gemäß Fig. 7 weist das Kopfmanschettenteil 11 eine Außenhülle 41 mit Seitenwänden 42, 43 und mit einer Deckwand 44 die unter Einschluss einer mit Luft gefüllten Isolierkammer 45 den Heizelementaufnahmeraum 14 umgeben. Dadurch wird der Wärmeverlust durch die in der Isolierkammer 45 vorhandene isolierende Luftschicht gegenüber dem Ausführungsbeispiel gemäß Fig. 1 bis Fig. 5 verringert.

## Patentansprüche

1. Heizeinrichtung für eine Fluidleitungskupplung (2) mit einem Trägerteil (10), das mit der Fluidleitungskupplung (2) verbindbar ist und das ein mit elektrischer Energie erwärmbares Heizelement (13) aufnimmt, wobei das Trägerteil als Ringmanschette (10) ausgeführt ist, die über zwei in einer geschlossenen Anordnung miteinander verbundene Manschettenteile (11, 12) verfügt, **dadurch gekennzeichnet, dass** ein Manschettenteil (11) einen durch Abschlusswände (23, 24, 39, 40) begrenzten Heizelementaufnahmeraum (14) aufweist, der auf seiner radial nach innen weisenden Seite geöffnet ist, dass das Heizelement (13) in dem Heizelementaufnahmeraum (14) angeordnet ist sowie mit seiner radial nach innen weisenden Stirnseite über die radial innen liegenden Innenwände (25, 26) der Manschettenteile (11, 12) übersteht und dass in Umfangsrichtung zwischen dem Heizelement (13) und den Innenwänden (25, 26) der Manschettenteile (11, 12) bei umschlossener Fluidleitungskupplung (2) ein mit Luft gefüllter Isolierringraum (27) ausgebildet ist.

2. Heizeinrichtung nach Anspruch 1, **dadurch gekennzeichnet, dass** an seitlichen Abschlusswänden (23, 24) des Heizelementaufnahmeraumes (14) radial nach innen vorstehende Vorsprünge ausgebildet sind, die bündig mit dem Heizelement (13) abschließen.

3. Heizeinrichtung nach Anspruch 1 oder Anspruch 2, **dadurch gekennzeichnet, dass** die Manschettenteile (11, 12) paarweise an einer Seite über ein Filmscharnier (18) miteinander verbunden sind und dass zwei Manschettenteile (11, 12) über eine Rastverbindung (19) lösbar miteinander verbunden sind.

4. Heizeinrichtung nach einem der Ansprüche 1 bis 3, **dadurch gekennzeichnet, dass** der Heizelementaufnahmeraum (14) in axialer Richtung an einer Einführseite (32) geöffnet ist.

5. Heizeinrichtung nach einem der Ansprüche 1 bis 4, **dadurch gekennzeichnet, dass** jedes Manschettenteil (11, 12) an einer Randseite wenigstens eine radial nach innen weisende Ringschulter (29, 30) aufweist.

6. Heizeinrichtung nach einem der Ansprüche 1 bis 5, **dadurch gekennzeichnet, dass** die Abschlusswände (23, 24, 39) des Heizelementaufnahmeraumes (14) in einem Abstand von einer Außenhülle (41) umgeben sind.

7. Heizeinrichtung nach einem der Ansprüche 1 bis 6, **dadurch gekennzeichnet, dass** das Heizelement (13) einen bei Beaufschlagen mit elektrischer Energie Wärme erzeugenden Stromleiter (15) und ein den Stromleiter (15) umgebendes sowie den Heizelementaufnahmeraum (14) ausfüllendes Füllmaterial (16) mit einer gegenüber dem Material des Manschettenteiles (11) sowie gegenüber Luft höheren thermischen Leitfähigkeit aufweist.

8. Heizeinrichtung nach Anspruch 7, **dadurch gekennzeichnet, dass** der Stromleiter (15) ein PTC-Widerstand ist.

9. Heizeinrichtung nach Anspruch 7, **dadurch gekennzeichnet, dass** der Stromleiter (15) ein NTC-Widerstand ist.

10. Fluidleitungskupplungsanordnung mit einer Heizeinrichtung (1) gemäß einem der Ansprüche 1 bis 9 und mit einer einen Mittenabschnitt (4) aufweisenden Fluidleitungskupplung (2), wobei der Mittenabschnitt (4) einen Außendurchmesser aufweist, der kleiner als der Innendurchmesser der Ringmanschette (10) in der geschlossenen Anordnung der Manschettenteile (11, 12) ist, wobei die radial nach innen weisende Stirnseite des Heizelementes (13) an der Außenwand (22) des Mittenabschnittes (4) formschlüssig anliegt.

11. Fluidleitungskupplungsanordnung nach Anspruch 10 mit einer Heizeinrichtung (1) gemäß einem der Ansprüche 2 bis 9, **dadurch gekennzeichnet, dass** in dem Mittenabschnitt (4) eine Mittenringnut (31) zur bündigen Aufnahme der an den Seitenwänden (23, 24) ausgebildeten Vorsprünge ausgebildet ist.

12. Fluidleitungskupplungsanordnung nach Anspruch 10 oder Anspruch 11 mit einer Heizeinrichtung (1) gemäß einem der Ansprüche 5 bis 9, **dadurch gekennzeichnet, dass** in dem Mittenabschnitt (4) für die oder jede Ringschulter (29, 30) eine Randringnut (28) ausgebildet ist.

## Claims

1. Heating device for a fluid line coupling (2) comprising a support part (10) which can be connected to the fluid line coupling (2) and accommodates a heating element (13) which can be heated with electrical energy, wherein the support part is configured as a collar (10) having two collar parts (11, 12) which are connected to one another in a closed arrangement, **characterised in that** one collar part (11) has a heating element accommodating chamber (14) delimited by enclosing walls (23, 24, 39, 40), said chamber being open at the radially inwardly facing side thereof, that the heating element (13) is arranged in the heating element accommodating chamber (14) and projects with the radially inwardly facing end face thereof beyond the radially inwardly situated inner walls (25, 26) of the collar parts (11, 12) and that, with the fluid line coupling (2) sealed, an annular insulating chamber (27) filled with air is formed in the peripheral direction between the heating element (13) and the inner walls (25, 26) of the collar parts (11, 12).

2. Heating device according to claim 1, **characterised in that** at lateral enclosing walls (23, 24) of the heating element accommodating chamber (14), radially inwardly extending projections are formed which end flush with the heating element (13).

3. Heating device according to claim 1 or 2, **characterised in that** the collar parts (11, 12) are connected to one another in paired manner at one side via a film hinge (18) and that two collar parts (11, 12) are releasably connected to one another via a locking connection (19).

4. Heating device according to one of the claims 1 to 3, **characterised in that** the heating element accommodating chamber (14) is open in the axial direction at a feed side (32).

5. Heating device according to one of the claims 1 to 4, **characterised in that** each collar part (11, 12) has at least one radially inwardly facing annular shoulder (29, 30) at one edge side.

6. Heating device according to one of the claims 1 to 5, **characterised in that** the enclosing walls (23, 24, 39) of the heating element accommodating chamber (14) are surrounded at a distance by an outer sleeve (41).

7. Heating device according to one of the claims 1 to 6, **characterised in that** the heating element (13) comprises a current conductor (15) which generates heat when electrical energy is applied thereto and a filler material (16) which surrounds the current conductor (15), fills the heating element accommodating chamber (14), and has a high thermal conductivity relative to the material of the collar part (11) and relative to air.

8. Heating device according to claim 7, **characterised in that** the current conductor (15) is a PTC resistor.

9. Heating device according to claim 7, **characterised in that** the current conductor (15) is an NTC resistor.

10. Fluid line coupling arrangement comprising a heating device (1) according to one of the claims 1 to 9 and a fluid line coupling (2) having a middle section (4), wherein the middle section (4) has an outer diameter which is smaller than the inner diameter of the collar (10) in the closed arrangement of the collar parts (11, 12), wherein the radially inwardly facing end face of the heating element (13) lies in positively engaged manner against the outer wall (22) of the middle section (4).

11. Fluid line coupling arrangement according to claim 10 comprising a heating device (1) according to one of the claims 2 to 9, **characterised in that** a middle annular groove (31) for flush accommodation of the projections provided at the side walls (23, 24) is provided in the middle section (4).

12. Fluid line coupling arrangement according to claim 10 or claim 11 comprising a heating device (1) according to one of the claims 5 to 9, **characterised in that** provided in the middle section (4) for the, or each, annular shoulder (29, 30) is an edge annular groove (28).

## Revendications

1. Dispositif chauffant pour un raccord pour conduite véhiculant un fluide (2) comportant un élément faisant office de support (10) qui est destiné à être raccordé au raccord pour conduite véhiculant un fluide (2) et dans lequel est logé un élément chauffant (13) activé par une source d'énergie électrique, dans lequel l'élément faisant office de support se présente sous la forme d'un manchon annulaire (10) qui se compose de deux coquilles (11, 12) raccordées ensemble de manière à constituer une structure fermée, **caractérisé en ce qu'**une coquille de manchonnage (11) comporte un logement de réception d'élément chauffant (14) défini par des parois terminales de délimitation (23, 24, 39, 40), qui est ouvert sur son côté orienté vers l'intérieur dans le plan radial, **en ce que** l'élément chauffant (13) est logé dans le logement de réception d'élément chauffant (14) et également fait saillie, au niveau de sa face antérieure orientée vers l'intérieur dans le plan radial, au-dessus des parois intérieures disposées à l'intérieur dans le plan radial (25, 26) des coquilles de manchonnage (11, 12) et **en ce qu'**il existe, dans la direction périphérique entre l'élément chauffant (13) et les parois intérieures (25, 26) des coquilles de manchonnage (11, 12), un espace annulaire isolant rempli d'air lorsque le système de raccordement pour conduite de fluide (2) es enserré dans cette structure.

2. Dispositif chauffant selon la revendication 1, **caractérisé en ce qu'**il est prévu, au niveau des parois terminales de délimitation (23, 24) du logement de réception d'élément chauffant (14) des protubérances faisant saillie vers l'intérieur, qui se terminent en affleurement de l'élément chauffant (13).

3. Dispositif chauffant selon la revendication 1 ou la revendication 2, **caractérisé en ce que** les coquilles de manchonnage (11, 12) sont raccordées ensemble par paire sur un côté par l'intermédiaire d'une charnière à amincissement (18) et **en ce que** deux coquilles de manchonnage (11, 12) sont raccordées ensemble de manière dissociable par l'intermédiaire d'un système d'accrochage par encastrement (19).

4. Dispositif chauffant selon l'une des revendications 1 à 3, **caractérisé en ce que** le logement de réception d'élément chauffant (14) est ouvert dans le sens axial sur son côté d'emmanchement (32).

5. Dispositif chauffant selon l'une des revendications 1 à 4, **caractérisé en ce que** chaque coquille de manchonnage (11, 12) comporte, au niveau de son bord latéral, au moins un épaulement annulaire (29, 30) faisant saillie vers l'intérieur dans le plan radial.

6. Dispositif chauffant selon l'une des revendications 1 à 5, **caractérisé en ce que** les parois terminales de délimitation (23, 24, 39) du logement de réception d'élément chauffant (14) sont entourées, avec un certain intervalle d'écartement, par une enveloppe extérieure (41).

7. Dispositif chauffant selon l'une des revendications 1 à 6, **caractérisé en ce que** l'élément chauffant (13) est muni d'un conducteur de courant (15) qui produit de la chaleur lorsqu'il est parcouru par un flux d'énergie électrique et d'un garnissage (16), qui entoure le conducteur de courant (15) et qui remplit le logement de réception d'élément chauffant (14), garnissage dont la conductibilité thermique est plus élevée que celle de la matière constitutive de la coquille de manchonnage (11) ainsi que celle de l'air.

8. Dispositif chauffant selon la revendication 7, **caractérisé en ce que** le conducteur de courant (15) est une résistance à coefficient positif de température.

9. Dispositif chauffant selon la revendication 7, **caractérisé en ce que** le conducteur de courant (15) est une résistance à coefficient négatif de température.

10. Système de raccordement pour conduite véhiculant un fluide comprenant un dispositif chauffant (1) conçu selon l'une des revendications 1 à 9 et un raccord pour conduite de fluide (2) présentant une portion médiane (4), la portion médiane (4) ayant en l'occurrence un diamètre extérieur qui est plus petit que le diamètre intérieur du manchon annulaire (10) lorsque les coquilles constitutives dudit manchon (11, 12) sont en position fermée, la face antérieure orientée vers l'intérieur dans le plan radial de l'élément chauffant (13) étant en l'occurrence, par l'action mécanique résultant de sa géométrie, en contact d'application contre la paroi extérieure (22) de la portion médiane (4).

11. Système de raccordement pour conduite véhiculant un fluide selon la revendication 10, comprenant un dispositif chauffant (1) conçu selon l'une des revendications 2 à 9, **caractérisé en ce qu'**il est prévu, dans la portion médiane (4), une gorge annulaire centrale (31) dans laquelle les protubérances que comportent les parois latérales (23, 24) sont destinées à venir s'insérer jusqu'en position d'affleurement.

12. Système de raccordement pour conduite véhiculant un fluide selon la revendication 10 ou la revendication 11, comprenant un dispositif chauffant (1) conçu selon l'une des revendications 5 à 9, **caractérisé en ce qu'**il est prévu, dans la portion médiane (4), une gorge circulaire périphérique (28) pour le ou chaque épaulement annulaire (29, 30).
